# EUROPEAN PATENT APPLICATION

(11) **EP 4 579 071 A2**
(43) Date of publication of application: **02.07.2025**
(21) Application number: 24223240.3
(22) Date of filing: 24.12.2024
(51) Int. Cl.: F02C 7/20, B64D 27/14, F02K 1/38, F02K 1/44, F02K 1/52

(54) **AIRCRAFT PROPULSION SYSTEM WITH ASYMMETRIC EXHAUST ASSEMBLY**

(30) Priority: 29.12.2023 US 202318400441
(71) Applicant: RTX Corporation, Farmington, CT 06032 (US)
(72) Inventor: KUPRATIS, Daniel B., Wallingford, 06492 (US); HANRAHAN, Paul R., Sedona, 86351 (US); MYLREA, Benjamin T., Jupiter, 33458 (US)
(74) Representative: Dehns

(57) **Abstract**

An aircraft system (20) includes a propulsion system (24). The propulsion system (24) includes a turbofan engine (60), a nacelle (62) and a bypass flowpath (106). The turbofan engine (60) includes a fan rotor (72) and an engine core (70) configured to drive rotation of the fan rotor (72) about an axis (54). The nacelle (62) houses the turbofan engine (60) and includes an outer structure (104). The outer structure (104) extends axially from a leading edge (112) to a trailing edge (114). The leading edge (112) is disposed at an airflow inlet (144) into the propulsion system (24). The trailing edge (114) is disposed at an airflow exhaust (110) from the bypass flowpath (106). An axial distance (118) from the fan rotor (72) to the trailing edge (114) decreases as the trailing edge (114) extends at least one-hundred and twenty degrees circumferentially about the axis (54). The bypass flowpath (106) is disposed downstream of the fan rotor (72) and radially outboard of the engine core (70). The bypass flowpath (106) extends axially within the propulsion system (24) to the airflow exhaust (110).

## Description

### BACKGROUND OF THE INVENTION

### 1. Technical Field

This invention relates generally to an aircraft and, more particularly, to an exhaust assembly for an aircraft propulsion system.

### 2. Background Information

Various types and configurations of exhaust assemblies are known in the art for an aircraft propulsion system. These known exhaust assemblies include those with lobed mixers. While the known exhaust assemblies have various benefits, there is still room in the art for improvement.

### SUMMARY OF THE INVENTION

According to an aspect of the present invention, an aircraft system is provided that includes a propulsion system. The propulsion system includes a turbofan engine, a nacelle and a bypass flowpath. The turbofan engine includes a fan rotor and an engine core configured to drive rotation of the fan rotor about an axis. The nacelle houses the turbofan engine and includes an outer structure. The outer structure extends axially from a leading edge to a trailing edge. The leading edge is disposed at an airflow inlet into the propulsion system. The trailing edge is disposed at an airflow exhaust from the bypass flowpath. An axial distance from the fan rotor to the trailing edge decreases as the trailing edge extends at least one-hundred and twenty degrees circumferentially about the axis. The bypass flowpath is disposed downstream of the fan rotor and radially outboard of the engine core. The bypass flowpath extends axially within the propulsion system to the airflow exhaust.

According to another aspect of the present invention, another aircraft system is provided that includes a propulsion system. The propulsion system includes an aircraft engine, a flowpath and a nacelle. The aircraft engine includes a propulsor rotor. The propulsor rotor is rotatable about an axis and configured to propel air through the flowpath to an airflow exhaust. The nacelle houses the aircraft engine. The nacelle includes an outer structure with a centerline coaxial with the axis. The outer structure extends axially from a leading edge to a trailing edge. The leading edge is disposed at an airflow inlet into the propulsion system. The trailing edge is disposed at the airflow exhaust. At least a section of the trailing edge is angularly offset from the centerline by an acute angle when viewed in a reference plane parallel with the centerline.

According to still another aspect of the present invention, another aircraft system is provided that includes a propulsion system. The propulsion system includes a turbine engine, an inner flowpath, an outer flowpath and an arcuate lobed mixer. The inner flowpath circumscribes an axis. The inner flowpath extends within the propulsion system to an inner exhaust from the inner flowpath. The outer flowpath is radially outboard of and circumscribes the inner flowpath. The outer flowpath extends within the propulsion system to an outer exhaust from the outer flowpath. The arcuate lobed mixer is arranged radially between and is at the inner exhaust and the outer exhaust. The arcuate lobed mixer extends partially circumferentially about the axis. The arcuate lobed mixer includes a plurality of mixer lobes arranged circumferentially about the axis in a circumferentially variably spaced array.

The following optional features may be applied to any of the above aspects.

The turbine engine may include a plurality of guide vanes. Each of the guide vanes may project radially across the outer flowpath. The guide vanes may be arranged circumferentially about the axis in an annular array. Each of the mixer lobes may be circumferentially aligned with a respective one of the guide vanes.

At least a portion of the trailing edge may be curved when viewed in the reference plane.

The propulsor rotor may be a fan rotor. The flowpath may be radially outboard of and may bypass a core of the aircraft engine which powers operation of the fan rotor.

The axial distance from the fan rotor to the trailing edge may decrease as the trailing edge extends at least one-hundred and fifty degrees circumferentially about the axis.

A first section of the outer structure may be diametrically opposite a second section of the outer structure. A first value of the axial distance at the first section of the outer structure may be equal to or greater than one and one-half times a second value of the axial distance at the second section of the outer structure.

The first value of the axial distance at the first section of the outer structure may be equal to or greater than two times the second value of the axial distance at the second section of the outer structure.

The aircraft system may also include an airframe comprising an airframe component. The propulsion system may be connected to the airframe component at a first section of the outer structure. The first section of the outer structure may be diametrically opposite a second section of the outer structure. A first value of the axial distance at the first section of the outer structure may be greater than a second value of the axial distance at the second section of the outer structure.

The propulsion system may also be connected to the airframe component at a gravitational top side of the airframe component.

The aircraft system may also include an airframe comprising an airframe component. The propulsion system may be connected to the airframe component at a second section of the outer structure. A first section of the outer structure may be diametrically opposite the second section of the outer structure. A first value of the axial distance at the first section of the outer structure may be greater than a second value of the axial distance at the second section of the outer structure.

The turbofan engine may also include a fan case and a guide vane structure. The fan case may axially overlap and extend circumferentially around the fan rotor and the guide vane structure. The guide vane structure may include a plurality of guide vanes arranged circumferentially about the axis. The guide vanes may include a first guide vane, a second guide vane and a third guide vane disposed circumferentially between and next to the first guide vane and the second guide vane. The first guide vane may be circumferentially spaced from the third guide vane by a first circumferential distance. The second guide vane may be circumferentially spaced from the third guide vane by a second circumferential distance that may be different than the first circumferential distance.

The turbofan engine may also include a fan case and a guide vane structure. The fan case may axially overlap and extend circumferentially around the fan rotor and the guide vane structure. The guide vane structure may include a plurality of guide vanes arranged circumferentially about the axis. The guide vanes may include a first guide vane, a second guide vane and a third guide vane disposed circumferentially between and next to the first guide vane and the second guide vane. The first guide vane may be circumferentially spaced from the third guide vane by a first circumferential distance. The second guide vane may be circumferentially spaced from the third guide vane by a second circumferential distance that may be equal to the first circumferential distance.

The turbofan engine may also include a fan case and a guide vane structure. The fan case may axially overlap and extend circumferentially around the fan rotor and the guide vane structure. The guide vane structure may include a plurality of guide vanes arranged circumferentially about the axis in a first sector and a second sector. A first set of the guide vanes in the first sector may be equispaced circumferentially about the axis. A second set of the plurality of guide vanes in the second sector may be non-equispaced circumferentially about the axis.

At least one of the first sector or the second sector may be semi-circular.

The propulsion system may also include a lobed mixer configured to mix bypass air exhausted from the bypass flowpath with combustion products exhausted from the engine core.

The turbofan engine may also include a plurality of guide vanes disposed within the bypass flowpath and arranged circumferentially about the axis. The propulsion system may also include a lobed mixer configured with a plurality of mixer lobes. Each of the mixer lobes may be circumferentially aligned with a respective one of the guide vanes.

A quantity of the guide vanes may be greater than a quantity of the mixer lobes.

The aircraft system may also include a fuselage of a blended wing body aircraft. The propulsion system may be mounted to the fuselage.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a plan view illustration of an aircraft.
FIG. 2 is a side view illustration of the aircraft.
FIG. 3 is a rear end view illustration of the aircraft.
FIG. 4 is a schematic side sectional illustration of a propulsion system mounted to an airframe component.
FIG. 5 is a schematic cross-sectional illustration of the propulsion system at a guide vane array with a lobed mixer overlaid on the guide vane array in dashed lines.
FIG. 6 is a schematic cross-sectional illustration of the propulsion system at the lobed mixer.
FIG. 7 is a schematic side sectional illustration of the propulsion system mounted to the airframe component, where the propulsion system of FIG. 7 has a different orientation than the propulsion system of FIG. 4.

### DETAILED DESCRIPTION

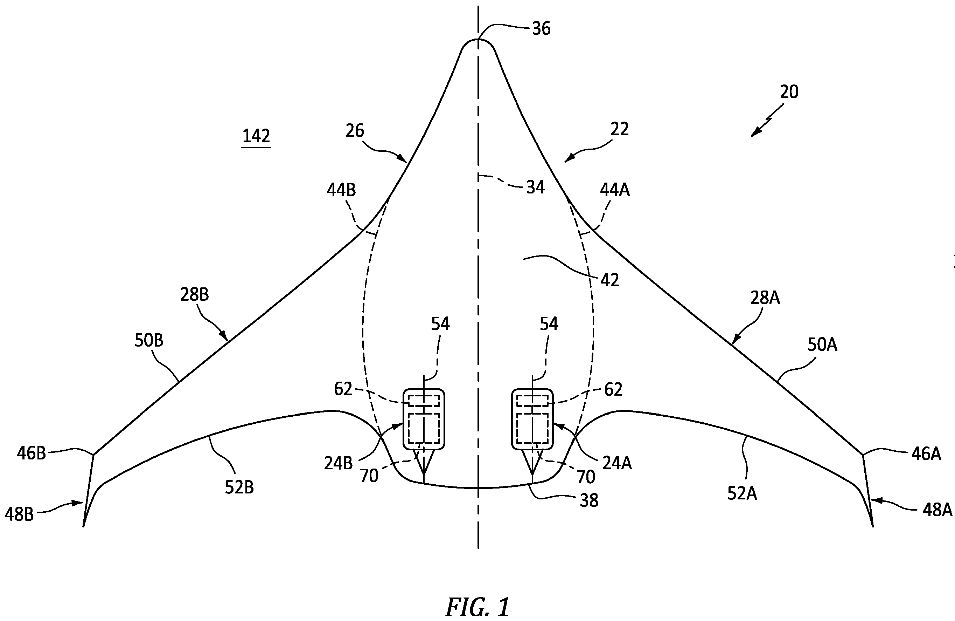

FIG. 1 illustrates a blended wing body (BWB) aircraft 20. This aircraft 20 includes an airframe 22 and one or more propulsion systems 24A and 24B (generally referred to as "24"). The aircraft airframe 22 of FIG. 1 includes a body 26 (e.g., a fuselage) and one or more wings 28A and 28B (generally referred to as "28").

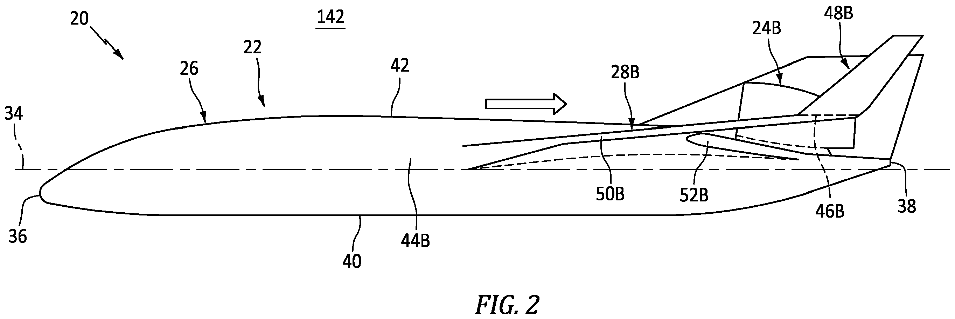

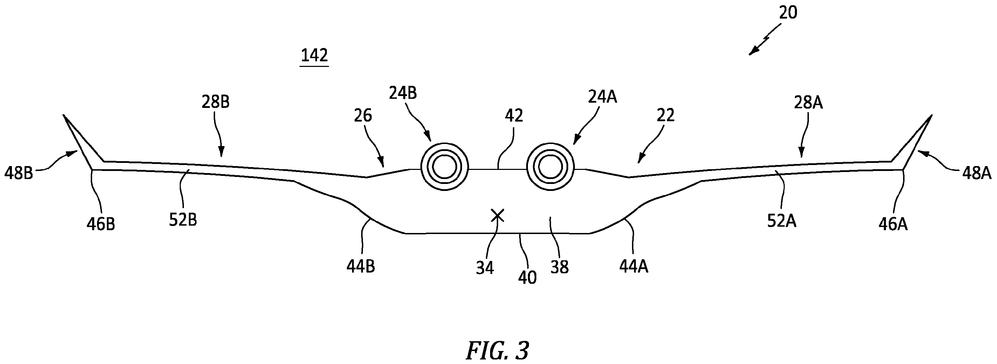

The aircraft body 26 extends longitudinally along a centerline 34 between and to a forward, upstream end 36 (e.g., a nose) of the aircraft body 26 and an aft, downstream end 38 of the aircraft body 26. This centerline 34 may be a centerline axis of the aircraft 20, the aircraft airframe 22 and/or the aircraft body 26. Referring to FIG. 2, the centerline 34 may be substantially (e.g., within +/- five degrees) or completely parallel with a horizon line when the aircraft 20 is flying in level flight. The aircraft body 26 extends vertically between and to opposing vertical bottom and top sides 40 and 42 of the aircraft body 26. The body bottom side 40 is vertically below the body top side 42 with respect to a gravitational direction when the aircraft 20 is flying in level flight. Referring to FIGS. 1 and 3, the aircraft body 26 extends laterally between and to opposing lateral sides 44A and 44B (generally referred to as "44") of the aircraft body 26.

The aircraft wings 28 of FIGS. 1 and 3 are arranged to the opposing lateral sides 44 of the aircraft body 26. Each of the aircraft wings 28 is connected to (e.g., fixed to) the aircraft body 26. Each of the aircraft wings 28A, 28B projects spanwise along a span line of the respective aircraft wing 28A, 28B out from the aircraft body 26, at the respective body lateral side 44A, 44B, to a distal tip 46A, 46B of the respective aircraft wing 28. At the wing tip 46A, 46B, the respective aircraft wing 28 may (or may not) be configured with a winglet 48A, 48B. Each of the aircraft wings 28 of FIG. 1 extends longitudinally along a mean line of the respective aircraft wing 28 from a leading edge 50A, 50B (generally referred to as "50") of the respective aircraft wing 28 to a trailing edge 52A, 52B (generally referred to as "52") of the respective aircraft wing 28. The wing leading edge 50 of FIG. 1, at a base of the respective aircraft wing 28, is longitudinally spaced aft, downstream from the body forward end 36. The wing trailing edge 52 of FIG. 1, at the wing base, is longitudinally spaced forward, upstream from the body aft end 38. The present invention, however, is not limited to such an exemplary aircraft wing arrangement.

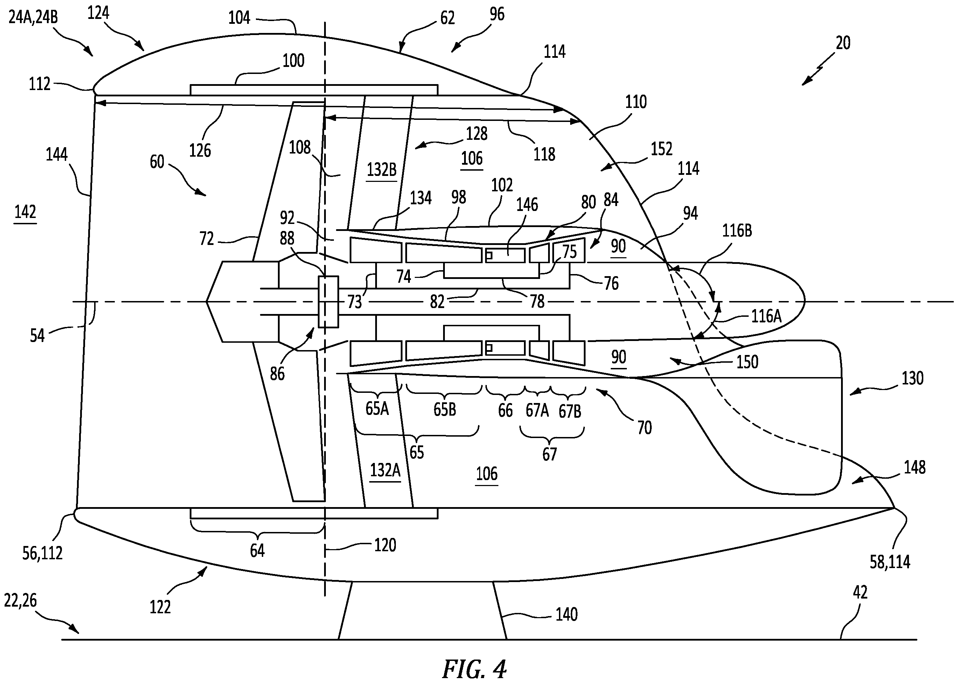

Referring to FIG. 4, each aircraft propulsion system 24 extends axially along an axis 54 from a forward, upstream end 56 of the aircraft propulsion system 24 to an aft, downstream end 58 of the aircraft propulsion system 24. This axis 54 may be a centerline axis of the individual aircraft propulsion system 24 and/or one or more components of the individual aircraft propulsion system 24 (e.g., 80, 84, 96, 104, 128 and 130 of FIG. 4). In other words, each aircraft propulsion system 24 includes a respective centerline axis 54 that is different from the centerline axis of another (e.g., second) aircraft propulsion system 24 associated with the aircraft 20. The axis 54 may also or alternatively be a rotational axis of one or more components of the aircraft propulsion system 24 (e.g., 72, 80 and 84 of FIG. 4). The aircraft propulsion systems 24 includes a turbine engine 60 and an engine nacelle 62 housing the turbine engine 60.

The turbine engine 60 may be configured as a turbofan engine. The turbine engine 60 of FIG. 4, for example, includes a fan section 64, a compressor section 65, a combustor section 66 and a turbine section 67. The compressor section 65 of FIG. 4 includes a low pressure compressor (LPC) section 65A and a high pressure compressor (HPC) section 65B. The turbine section 67 of FIG. 4 includes a high pressure turbine (HPT) section 67A and a low pressure turbine (LPT) section 67B. The LPC section 65A, the HPC section 65B, the combustor section 66, the HPT section 67A and the LPT section 67B may collectively form a core 70 of the turbine engine 60.

Each of the engine sections 64, 65A, 65B, 67A and 67B includes a respective bladed rotor 72-76. Each of these engine rotors 72-76 includes a plurality of rotor blades arranged circumferentially around and connected to one or more respective rotor disks or hubs. The rotor blades, for example, may be formed integral with or mechanically fastened, welded, brazed and/or otherwise attached to the respective rotor disk(s) or hub(s).

The HPC rotor 74 is coupled to and rotatable with the HPT rotor 75. The HPC rotor 74 of FIG. 4, for example, is connected to the HPT rotor 75 through a high speed shaft 78. At least (or only) the HPC rotor 74, the HPT rotor 75 and the high speed shaft 78 may collectively form a high speed rotating assembly 80; e.g., a high speed spool of the engine core 70. The high speed rotating assembly 80 of FIG. 4 and its members are configured to rotate about the axis 54.

The LPC rotor 73 is coupled to and rotatable with the LPT rotor 76. The LPC rotor 73 of FIG. 4, for example, is connected to the LPT rotor 76 through a low speed shaft 82. At least (or only) the LPC rotor 73, the LPT rotor 76 and the low speed shaft 82 may collectively form a low speed rotating assembly 84; e.g., a low speed spool of the engine core 70. This low speed rotating assembly 84 is also coupled to and rotatable with the fan rotor 72 through a drivetrain 86. This drivetrain 86 may be configured as a geared drivetrain, where a geartrain 88 (e.g., a transmission, a speed change device, an epicyclic geartrain, etc.) is disposed between and operatively couples the fan rotor 72 to the low speed rotating assembly 84 and its LPT rotor 76. With this arrangement, the fan rotor 72 may rotate at a different (e.g., slower) rotational velocity than the low speed rotating assembly 84 and its LPT rotor 76. However, the drivetrain 86 may alternatively be configured as a direct drive drivetrain, where the geartrain 88 is omitted. With this arrangement, the fan rotor 72 rotates at a common (the same) rotational velocity as the low speed rotating assembly 84 and its LPT rotor 76. Referring again to FIG. 4, the low speed rotating assembly 84 and its members as well as the fan rotor 72 are configured to rotate about the axis 54.

An annular core flowpath 90 extends through the engine core 70 from an airflow inlet 92 into the core flowpath 90 to a combustion products exhaust 94 from the core flowpath 90. The core flowpath 90 of FIG. 4, for example, extends sequentially through the LPC section 65A, the HPC section 65B, the combustor section 66, the HPT section 67A and the LPT section 67B between the core inlet 92 and the core exhaust 94. The core inlet 92 of FIG. 4 is disposed axially downstream of and next to the fan section 64.

The engine sections 64-67B are arranged (e.g., sequentially along the axis 54) within a stationary structure 96 of the aircraft propulsion system 24. This stationary structure 96 includes an inner case 98 (e.g., a core case), an outer case 100 (e.g., a fan case), an inner structure 102 of the engine nacelle 62 (e.g., an inner fixed structure (IFS)), and an outer structure 104 of the engine nacelle 62. The inner case 98 houses the engine core 70 and its engine sections 65A-67B. The outer case 100 houses the fan section 64. The nacelle inner structure 102 houses and provides an aerodynamic cover over the inner case 98. The nacelle outer structure 104 houses and provides an aerodynamic cover over the outer case 100. The nacelle outer structure 104 is also spaced radially outboard from and extends axially along (e.g., overlaps) at least a portion of the nacelle inner structure 102. With this arrangement, an annular bypass flowpath 106 is formed within the stationary structure 96 downstream of the fan section 64.

The bypass flowpath 106 extends axially along the axis 54 within the stationary structure 96 from an airflow inlet 108 into the bypass flowpath 106 to an airflow exhaust 110 from the bypass flowpath 106. The bypass inlet 108 of FIG. 4 is disposed axially downstream of and next to the fan section 64, and radially outboard of the core inlet 92. A radial inner peripheral boundary of the bypass flowpath 106 is formed by at least the nacelle inner structure 102. A radial outer peripheral boundary of the bypass flowpath 106 is formed by at least the nacelle outer structure 104 as well as a downstream portion of the outer case 100. With this arrangement, the bypass flowpath 106 bypasses (e.g., extends around and outside of) the engine core 70 and its engine sections 65A-67B.

The nacelle outer structure 104 extends axially along the axis 54 from a leading edge 112 of the nacelle outer structure 104 to a trailing edge 114 of the nacelle outer structure 104. The outer structure leading edge 112 is disposed at and may form the propulsion system upstream end 56. The outer structure trailing edge 114 may be disposed at and may form the propulsion system downstream end 58. The outer structure trailing edge 114 may also be disposed at and form a radial outer peripheral boundary of the bypass exhaust 110.

The outer structure trailing edge 114 and, thus, the bypass exhaust 110 may have a canted configuration. At least a section or an entirety of the outer structure trailing edge 114 of FIG. 4, for example, is angularly offset from a centerline of the nacelle outer structure 104 and its outer structure trailing edge 114 (e.g., the axis 54) by an offset angle 116A, 116B when viewed, for example, in a first reference plane parallel with (e.g., including or laterally offset from) the axis 54. When viewed vertically below the axis 54 in FIG. 4, the offset angle 116A is a non-zero acute angle, which may vary between fifteen degrees (15°) and eight-five degrees (85°). When viewed vertically above the axis 54 in FIG. 4, the offset angle 116B is an obtuse angle, which may vary between ninety-five degrees (95°) and one-hundred and seventy degrees (170°).

The outer structure trailing edge 114 is axially spaced from the fan rotor 72 by an axial distance 118. More particularly, the outer structure trailing edge 114 of FIG. 4 is axially spaced from a second reference plane 120 defined by an aft, downstream side of the fan rotor 72 by the axial distance 118, which second reference plane 120 is perpendicular to the axis 54. The axial distance 118 decreases (or increases) as each half of the outer structure trailing edge 114 extends X number of degrees circumferentially about the axis 54. This X number of degrees may be equal to or greater than ninety degrees (90°), one-hundred and twenty degrees (120°), or one-hundred and fifty degrees (150°). However, the X number of degrees typically will not exceed one-hundred and eighty degrees (180°) where, for example, the outer structure trailing edge 114 is symmetrical about the axis 54. For example, the axial distance 118 of FIG. 4 decreases as each half of the outer structure trailing edge 114 extends circumferentially about the axis 54 from a first section 122 of the nacelle outer structure 104 to a second section 124 of the nacelle outer structure 104. Here, the outer structure first section 122 of FIG. 4 is arranged diametrically opposite the outer structure second section 124 about the axis 54, where the outer structure sections 122 and 124 are circumferentially spaced by one-hundred and eighty degrees (180°). A first value of the axial distance 118 at the outer structure first section 122 is greater than a second value of the axial distance 118 at the outer structure second section 124. The first value, for example, may be equal to or greater than one and one-half times (1.5x), two times (2x), three times (3x) or four times (4x) the second value. The present invention, however, is not limited to such an exemplary dimensional relationship.

The decrease in the axial distance 118 may be continuous or iterative between the outer structure first section 122 and the outer structure second section 124. A slope of the decrease in the axial distance 118 may be constant or variable between the outer structure first section 122 and the outer structure second section 124. For example, the decrease in the axial distance 118 from the outer structure first section 122 to the outer structure second section 124 of FIG. 4 is continuous with a variable slope. With this arrangement, at least a portion or an entirety of each half of the outer structure trailing edge 114 may be curved; e.g., splined, arcuate, wavy, etc.

The nacelle outer structure 104 has an axial length 126 extending from the outer structure leading edge 112 to the outer structure trailing edge 114. A first value of the axial length 126 at the outer structure first section 122 may be greater than a second value of the axial length 126 at the outer structure second section 124. The first value, for example, may be equal to or greater than one and one-quarter times (1.25x), one and one-half times (1.5x) or two times (2x) the second value. The present invention, however, is not limited to such an exemplary dimensional relationship.

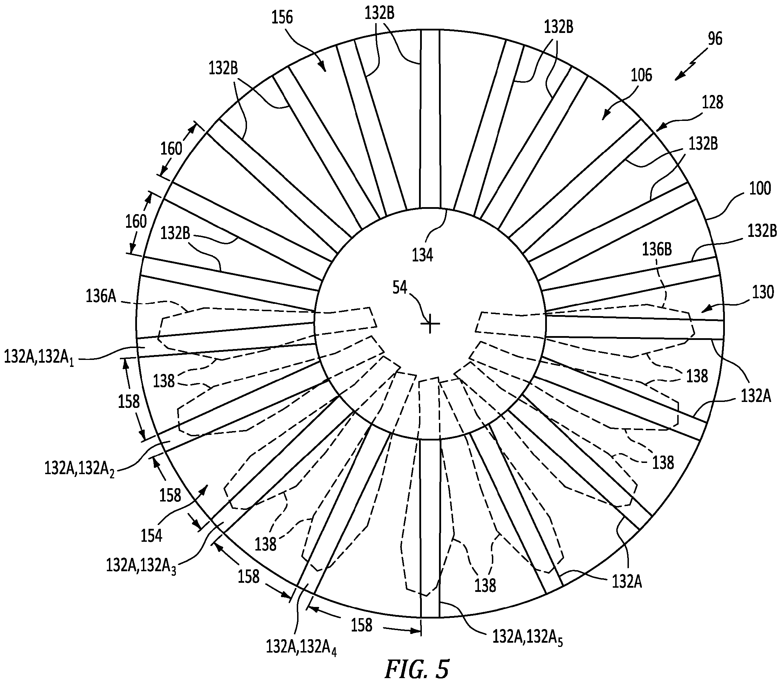

The stationary structure 96 of FIG. 4 also includes a guide vane structure 128 and a lobed mixer 130. The guide vane structure 128 is arranged along the bypass flowpath 106 between the fan rotor 72 and the bypass exhaust 110. The guide vane structure 128 of FIG. 4, for example, is disposed at (e.g., on, adjacent or proximate) the bypass inlet 108. Referring to FIG. 5, the guide vane structure 128 includes a plurality of guide vanes 132A and 132B (generally referred to as "132") arranged circumferentially about the axis 54 in an annular array; e.g., a circular array. Each of the guide vanes 132 extends radially across the bypass flowpath 106 from the inner peripheral boundary of the bypass flowpath 106 to the outer peripheral boundary of the bypass flowpath 106. Referring to FIG. 4, each of the guide vanes 132 may also be connected (e.g., structurally tied) to the outer case 100 and a frame structure 134, which frame structure 134 is connected to the inner case 98. With this arrangement, the guide vane structure 128 and its guide vanes 132 are configured to condition (e.g., straighten out) air propelled into the bypass flowpath 106 by the fan rotor 72.

The lobed mixer 130 is configured to mix bypass air exhausted from the bypass flowpath 106 with combustion products exhausted from the engine core 70 and its core flowpath 90. The lobed mixer 130 of FIG. 4, for example, is arranged at and radially between the bypass exhaust 110 and the core exhaust 94. This lobed mixer 130 is connected to at least one component of the stationary structure 96 radially between the bypass flowpath 106 and the core flowpath 90; e.g., the inner case 98 and/or the nacelle inner structure 102.

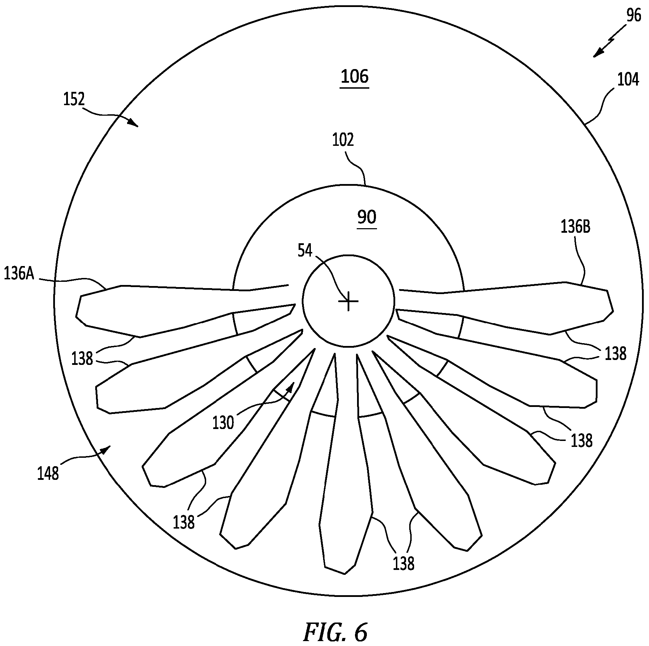

Referring to FIG. 6, the lobed mixer 130 may be configured as an arcuate lobed mixer; e.g., a semi-annular lobed mixer. The lobed mixer 130 of FIG. 6, for example, extends Y number of degrees circumferentially about a centerline of the lobed mixer 130 (e.g., the axis 54) between circumferentially opposing ends 136A and 136B of the lobed mixer 130. This Y number of degrees may be greater than one-hundred and sixty degrees (160°) and less than two-hundred and forty degrees (240°); e.g., about one-hundred and eighty degrees (180°). The lobed mixer 130 of FIG. 6 includes a plurality of mixer lobes 138 arranged circumferentially about the axis 54 between the opposing mixer ends 136A and 136B in an arcuate array; e.g., a semi-circular array. One of the mixer lobes 138 may define the first mixer end 136A and where another one of the mixer lobes 138 may define the second mixer end 136B. Each of the mixer lobes 138 may have a similar or a common (the same) configuration; e.g., shape, dimensions (e.g., radial height, circumferential width), etc. The present invention, however, is not limited to such an exemplary arrangement.

Referring to FIG. 1, the aircraft propulsion systems 24 are arranged laterally side-by-side along the aircraft body 26 at the body top side 42 and/or the body aft end 38. These aircraft propulsion systems 24 are disposed to opposing lateral sides of the centerline 34, where the axis 54 of each aircraft propulsion system 24 may be arranged parallel with the centerline 34. The aircraft propulsion systems 24 are also equilaterally spaced from the centerline 34. Referring to FIG. 4, each aircraft propulsion system 24 is also connected (e.g., mechanically fixed) to the aircraft body 26. A portion of the stationary structure 96 at the outer structure first section 122, for example, is mounted to the aircraft body 26 by a pylon structure 140. With this arrangement, the outer structure first section 122 is located vertically between the outer section second section 124 and the aircraft body 26.

During operation of each aircraft propulsion system 24, ambient air from an environment 142 external to the aircraft propulsion system 24 as well as the aircraft 20 enters the aircraft propulsion system 24 through an airflow inlet 144 at the outer structure leading edge 112. This air is directed through the fan section 64 and (in parallel) into the core flowpath 90 through its core inlet 92 and into the bypass flowpath 106 through its bypass inlet 108. The air entering the core flowpath 90 may be referred to as core air. The air entering the bypass flowpath 106 may be referred to as the bypass air.

The core air is compressed by the LPC rotor 73 and the HPC rotor 74 and directed into a (e.g., annular) combustion chamber 146 of a (e.g., annular) combustor in the combustor section 66. Fuel is injected into the combustion chamber 146 and mixed with the compressed core air to provide a fuel-air mixture. This fuel-air mixture is ignited and the combustion products thereof flow through and sequentially drive rotation of the HPT rotor 75 and the LPT rotor 76 about the axis 54. The rotation of the HPT rotor 75 and the LPT rotor 76 respectively drive rotation of the HPC rotor 74 and the LPC rotor 73 about the axis 54. The rotation of the LPT rotor 76 also drives rotation of the fan rotor 72 about the axis 54 through the drivetrain 86. The rotation of the fan rotor 72 propels the bypass air through the bypass flowpath 106 and out of the aircraft propulsion system 24 through the bypass exhaust 110 to provide forward aircraft thrust. This propulsion of the bypass air out of the bypass exhaust 110 may account for a majority of thrust generated by the turbine engine 60, e.g., more than seventy-five percent (75%) of engine thrust. The turbine engine 60 of the present invention, however, is not limited to the foregoing exemplary thrust ratio.

As the bypass air is exhausted from the bypass flowpath 106 and the combustion products are exhausted from the core flowpath 90, the lobed mixer 130 mixes some of the exhausted bypass air with some of the exhausted combustion products. For example, with the arrangement of FIG. 4 (see also FIG. 6), the lobed mixer 130 mixes the bypass air flowing out of a first sector 148 (e.g., a vertical bottom half) of the bypass exhaust 110 with the combustion products flowing out of a first sector 150 (e.g., a vertical bottom half) of the core exhaust 94 to provide mixed exhaust gas. This mixed exhaust gas may have a different (e.g., slower) flow velocity than the remaining bypass air flowing out of a second sector 152 (e.g., a vertical top half) of the bypass exhaust 110. This flow velocity differential may impart a net torque and force on the aircraft 20 which may cause the aircraft 20 and its body forward end 36 (see FIG. 2) to pitch down. Providing the aircraft 20 with a slight propensity to pitch down (or up) may be advantageous for some aircraft designs.

In some embodiments, referring to FIG. 5, each of the mixer lobes 138 may be circumferentially aligned with a respective one of the guide vanes 132A. Such an arrangement may reduce aerodynamic drag along the bypass flowpath 106. In other embodiments, however, one or more of the mixer lobes 138 may alternatively be slightly or completely circumferentially offset from a respective circumferentially closest one of the guide vanes 132A.

In some embodiments, referring to FIG. 5, the guide vanes 132A and 132B may be arranged into two (or more) sets. The first set of the guide vanes 132A are arranged in a first sector 154 (e.g., a vertical bottom half) of the bypass flowpath 106. The second set of the guide vanes 132B are arranged in a second sector 156 (e.g., a vertical top half) of the bypass flowpath 106. The guide vanes 132A arranged in the first sector 154 may be variably spaced (e.g., non-equispaced) circumferentially about the axis 54. For example, the guide vanes 132A closest to the second sector 156 may be closer together than the guide vanes 132A in a middle of the first sector 154. Each circumferentially neighboring (e.g., adjacent) pair of the guide vanes 132A, for example, are spaced circumferentially apart by a circumferential distance 158; e.g., measured along the outer peripheral boundary of the bypass flowpath 106. In the first sector 154 of FIG. 5, the distance 158 between the neighboring guide vanes 132A₁ and 132A₂ is less than the distance 158 between the neighboring guide vanes 132A₂ and 132A₃, the distance 158 between the neighboring guide vanes 132A₂ and 132A₃ is less than the distance 158 between the neighboring guide vanes 132A₃ and 132A₄, and the distance 158 between the neighboring guide vanes 132A₃ and 132A₄ is less than the distance 158 between the neighboring guide vanes 132A₄ and 132A₅. By contrast, the guide vanes 132B arranged in the second sector 156 may be equispaced circumferentially about the axis 54. For example, each circumferentially neighboring pair of the guide vanes 132B in the second sector 156 may be spaced circumferentially apart by a common circumferential distance 160. This distance 160 may be equal to or less than the distance 158 between the neighboring guide vanes 132A₁ and 132A₂. With such an arrangement, the guide vanes 132 may be tuned to reduce or prevent pressure oscillations on the fan rotor 72 imparted by the provision of the lobed mixer 130 and/or the canted bypass exhaust 110 (see FIG. 4). Though described above as a first distance (e.g., 158, 160) being equal to or less than a second distance (e.g., 158), it is contemplated herein that any distance 158 or 160 may be equal to or greater than another distance 158, 160 in tuning the guide vanes 132 to reduce or prevent pressure oscillations on the fan rotor 72.

In the embodiment of FIG. 5, the first sector 154 and the second sector 156 are configured as semi-circular half sectors, where each half sector extends one-hundred and eighty degrees (180°) circumferentially about the axis 54. The first sector 154 and the second sector 156 thereby have a common circumferential width. It is contemplated, however, the first sector 154 and the second sector 156 may alternatively have different circumferential widths in other embodiments.

The guide vane structure 128 includes N number of the guide vanes 132A in the first sector 154 and M number of the guide vanes 132B in the second sector 156. In the embodiment of FIG. 5, the N number of the guide vanes 132A is less than the M number of guide vanes 132B. It is contemplated, however, the N number of the guide vanes 132A may alternatively be equal to the M number of guide vanes 132B where, for example, all of the guide vanes 132 are alternatively equispaced circumferentially about the axis 54.

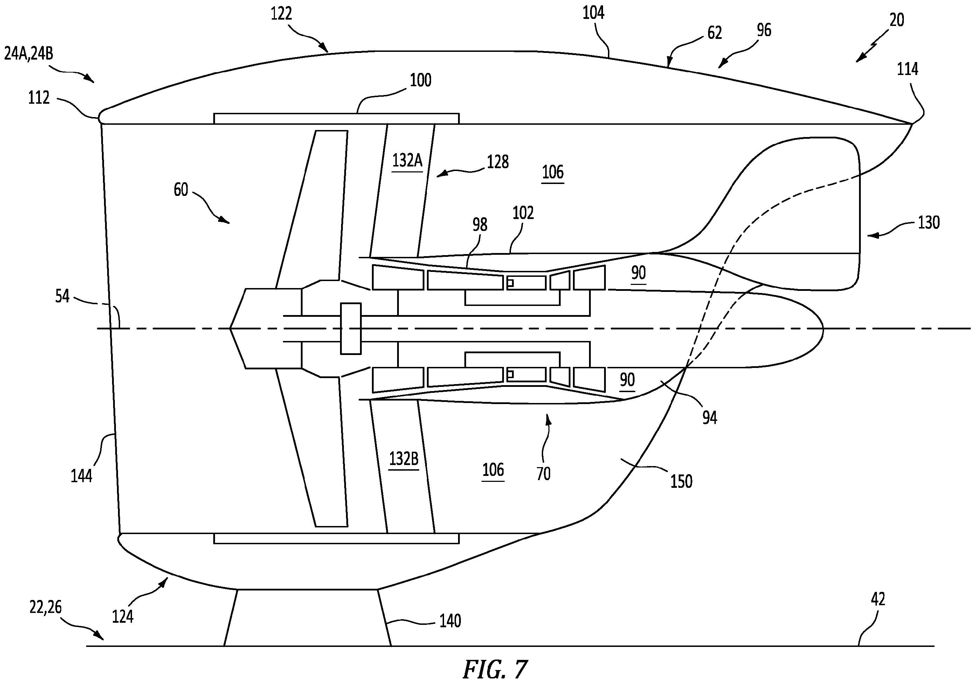

An exemplary arrangement of the aircraft propulsion system 24 is shown in FIG. 4. With this arrangement, as discussed above, the aircraft propulsion system 24 is configured to impart a net torque and force on the aircraft 20 which may cause the aircraft 20 and its body forward end 36 to pitch down. In other embodiments, however, there may be a need to impart a net torque and force on the aircraft 20 which may cause the aircraft 20 and its body forward end 36 (see FIG. 2) to pitch up. In such embodiments, for example referring to FIG. 7, a portion of the stationary structure 96 at the outer structure second section 124 may be mounted to the aircraft body 26 by the pylon structure 140. With this arrangement, the outer structure second section 124 is located vertically between the outer section first section 122 and the aircraft body 26. Moreover, while each aircraft propulsion system 24 is described above as being arranged towards / at the body top side 42, it is contemplated the aircraft propulsion systems 24 may alternatively be arranged towards / at the body bottom side 40 of FIG. 2. In addition or alternatively, it is contemplated the aircraft propulsion systems 24 may alternatively be mounted to the aircraft wings 28 of FIG. 1 rather than the aircraft body 26. The present invention therefore is not limited to the exemplary arrangements shown in the drawings.

An exemplary arrangement of the turbine engine 60 is shown in FIG. 4. While this turbine engine 60 is shown as a turbofan engine with the fan section 64 and its fan rotor 72, the present invention is not limited thereto. The turbine engine 60, for example, may alternatively be configured as another type of engine (e.g., a turbojet engine) with another type of propulsor rotor (e.g., a first stage compressor rotor).

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An aircraft system (20), comprising:
a propulsion system (24) including a turbofan engine (60), a nacelle (62) and a bypass flowpath (106);
the turbofan engine (60) including a fan rotor (72) and an engine core (70) configured to drive rotation of the fan rotor (72) about an axis (54);
the nacelle (62) housing the turbofan engine (60) and comprising an outer structure (104), the outer structure (104) extending axially from a leading edge (112) to a trailing edge (114), the leading edge (112) disposed at an airflow inlet (144) into the propulsion system (24), and the trailing edge (114) disposed at an airflow exhaust (110) from the bypass flowpath (106), wherein an axial distance (118) from the fan rotor (72) to the trailing edge (114) decreases as the trailing edge (114) extends at least one-hundred and twenty degrees circumferentially about the axis (54); and
the bypass flowpath (106) disposed downstream of the fan rotor (72) and radially outboard of the engine core (70), and the bypass flowpath (106) extending axially within the propulsion system (24) to the airflow exhaust (110).

2. The aircraft system (20) of claim 1, wherein the axial distance (118) from the fan rotor (72) to the trailing edge (114) decreases as the trailing edge (114) extends at least one-hundred and fifty degrees circumferentially about the axis (54).

3. The aircraft system (20) of claim 1 or 2, further comprising:
an airframe (22) comprising an airframe component (26);
the propulsion system (24) connected to the airframe component (26) at a or the first section (122) of the outer structure (104), the first section (122) of the outer structure (104) diametrically opposite a second section (124) of the outer structure (104), and a first value of the axial distance (118) at the first section (122) of the outer structure (104) greater than a second value of the axial distance (118) at the second section (124) of the outer structure (104).

4. The aircraft system (20) of claim 3, wherein the propulsion system (24) is further connected to the airframe component (26) at a gravitational top side (42) of the airframe component (26).

5. The aircraft system (20) of claim 1 or 2, further comprising:
an airframe (22) comprising an airframe component (26);
the propulsion system (24) connected to the airframe (22) component at a or the second section (124) of the outer structure (104), a first section (122) of the outer structure (104) diametrically opposite the second section (124) of the outer structure (104), and a first value of the axial distance (118) at the first section (122) of the outer structure (104) greater than a second value of the axial distance (118) at the second section (124) of the outer structure (104).

6. The aircraft system (20) of any preceding claim, wherein:
a or the first section (122) of the outer structure (104) is diametrically opposite a or the second section (124) of the outer structure (104); and
a or the first value of the axial distance (118) at the first section (122) of the outer structure (104) is equal to or greater than 1.5 times, optionally equal to or greater than 2 times, a or the second value of the axial distance (118) at the second section (124) of the outer structure (104).

7. The aircraft system (20) of any preceding claim, wherein:
the turbofan engine (60) further includes a fan case (100) and a guide vane structure (128);
the fan case axially overlaps and extends circumferentially around the fan rotor (72) and the guide vane structure (128); and
the guide vane structure (128) includes a plurality of guide vanes (132A) arranged circumferentially about the axis (54), the plurality of guide vanes (132A) include a first guide vane (132A₁), a second guide vane (132A₂) and a third guide vane (132A₃) disposed circumferentially between and next to the first guide vane (132A₁) and the second guide vane (132A₂), the first guide vane (132A₁) is circumferentially spaced from the third guide vane (132A₃) by a first circumferential distance (158), and the second guide vane (132A₂) is circumferentially spaced from the third guide vane (132A₃) by a second circumferential distance (158) that is different than the first circumferential distance (158).

8. The aircraft system (20) of any of claims 1 to 6, wherein:
the turbofan engine (60) further includes a fan case (100) and a guide vane structure (128);
the fan case (100) axially overlaps and extends circumferentially around the fan rotor (72) and the guide vane structure (128); and
the guide vane structure (128) includes a plurality of guide vanes (132B) arranged circumferentially about the axis (54), the plurality of guide vanes (132B) include a first guide vane (132B), a second guide vane (132B) and a third guide vane (132B) disposed circumferentially between and next to the first guide vane (132B) and the second guide vane (132B), the first guide vane (132B) is circumferentially spaced from the third guide vane (132B) by a first circumferential distance (160), and the second guide vane (132B) is circumferentially spaced from the third guide vane (132B) by a second circumferential distance (160) that is equal to the first circumferential distance (160).

9. The aircraft system (20) of any of claims 1 to 6, wherein
the turbofan engine (60) further includes a fan case (100) and a guide vane structure (128);
the fan case (100) axially overlaps and extends circumferentially around the fan rotor (72) and the guide vane structure (128);
the guide vane structure (128) includes a plurality of guide vanes (132A, 132B) arranged circumferentially about the axis (54) in a first sector (156) and a second sector (154);
a first set of the plurality of guide vanes (132B) in the first sector (156) are equispaced circumferentially about the axis (54); and
a second set of the plurality of guide vanes (132A) in the second sector (154) are non-equispaced circumferentially about the axis (54),
wherein, optionally, at least one of the first sector (156) or the second sector (154) is semi-circular.

10. The aircraft system (20) of any preceding claim, wherein the propulsion system further includes a lobed mixer (130) configured to mix bypass air exhausted from the bypass flowpath (106) with combustion products exhausted from the engine core (70).

11. The aircraft system (20) of any preceding claim, wherein:
the turbofan engine (60) further includes a or the plurality of guide vanes (132A, 132B) disposed within the bypass flowpath (106) and arranged circumferentially about the axis (54); and
the propulsion system (24) further includes a or the lobed mixer (130) configured with a plurality of mixer lobes (138), and each of the plurality of mixer lobes (138) is circumferentially aligned with a respective one of the plurality of guide vanes (132A, 132B),
wherein, optionally, a quantity of the plurality of guide vanes (132A, 132B) is greater than a quantity of the plurality of mixer lobes (138).

12. The aircraft system (20) of any preceding claim, further comprising:
a fuselage (26) of a blended wing body aircraft (20);
the propulsion system (24) mounted to the fuselage (26).

13. An aircraft system (20), comprising:
a propulsion system (24) including an aircraft engine (60), a flowpath (106) and a nacelle (62);
the aircraft engine (60) comprising a propulsor rotor (72), and the propulsor rotor (72) rotatable about an axis (54) and configured to propel air through the flowpath (106) to an airflow exhaust (110); and
the nacelle (62) housing the aircraft engine (60) and comprising an outer structure (104) with a centerline coaxial with the axis (54), the outer structure (104) extending axially from a leading edge (112) to a trailing edge (114), the leading edge (112) disposed at an airflow inlet (144) into the propulsion system (24), and the trailing edge (114) disposed at the airflow exhaust (110), wherein at least a section of the trailing edge (114) is angularly offset from the centerline by an acute angle (116A, 116B) when viewed in a reference plane parallel with the centerline.

14. The aircraft (20) system of claim 13, wherein:
at least a portion of the trailing edge (114) is curved when viewed in the reference plane; and/or
the propulsor rotor (72) is a fan rotor (72) and the flowpath (106) is radially outboard of and bypasses a core (70) of the aircraft engine (60) which powers operation of the fan rotor (72).

15. An aircraft system (20), comprising:
a propulsion system (24) including a turbine engine (60), an inner flowpath (90), an outer flowpath (106) and an arcuate lobed mixer (130);
the inner flowpath (90) circumscribing an axis (54), and the inner flowpath (90) extending within the propulsion system (24) to an inner exhaust (94) from the inner flowpath (90);
the outer flowpath (106) radially outboard of and circumscribing the inner flowpath (90), and the outer flowpath (106) extending within the propulsion system (24) to an outer exhaust (110) from the outer flowpath (106); and
the arcuate lobed mixer (130) arranged radially between and at the inner exhaust (94) and the outer exhaust (110), the arcuate lobed mixer (130) extending partially circumferentially about the axis (54), and the arcuate lobed mixer (130) including a plurality of mixer lobes (138) arranged circumferentially about the axis (54) in a circumferentially variably spaced array,
wherein optionally:
the turbine engine (60) includes a plurality of guide vanes (132A, 132B);
each of the plurality of guide vanes (132A, 132B) projects radially across the outer flowpath (106);
the plurality of guide vanes (132A, 132B) are arranged circumferentially about the axis (54) in an annular array; and
each of the plurality of mixer lobes (138) is circumferentially aligned with a respective one of the plurality of guide vanes (132A, 132B).
